(19) Europäisches Patentamt
European Patent Office
Office européen des brevets

(11) Publication number: **0 244 126 B1**

# (12) EUROPEAN PATENT SPECIFICATION

(45) Date of publication of patent specification: **13.05.92**

(51) Int. Cl.5: **B01D 71/48**, B01D 71/50, B01D 53/22, C01B 13/02, C08G 63/64

(21) Application number: **87303339.3**

(22) Date of filing: **15.04.87**

## (54) Tetrabromo bisphenol based polyestercarbonate membranes and method of using.

(30) Priority: **28.04.86 US 856878**

(43) Date of publication of application: **04.11.87 Bulletin 87/45**

(45) Publication of the grant of the patent: **13.05.92 Bulletin 92/20**

(84) Designated Contracting States: **AT BE CH DE ES FR GB IT LI NL SE**

(56) References cited:
**US-A- 3 822 202**

**PATENT ABSTRACTS OF JAPAN, vol. 10, no. 98 (C-339)[2155], 15th April 1986; & JP-A-60 228 531 (MITSUBISHI KASEI KOGYO K.K.) 13-11-1985; & CHEMICAL ABSTRACTS, vol. 105, no. 2, 14th July 1986, page 13, no. 7009e, Columbus, Ohio, US; & JP-A-60 228 531 (MITSUBISHI CHEMICAL INDUSTRIES CO., LTD) 13-11-1985**

(73) Proprietor: **THE DOW CHEMICAL COMPANY**
**2030 Dow Center Abbott Road P.O. Box 1967**
**Midland Michigan 48640-1967(US)**

(72) Inventor: **Anand, Joginder N.**
**30 Mountaire Place**
**Clayton California 94517(US)**
Inventor: **Jeanes, Thomas O.**
**2312 Robles Drive**
**Antioch California 94509(US)**
Inventor: **Feay, Darrell C.**
**67 La Cuesta**
**Orinda California 94563(US)**
Inventor: **Bales, Stephen E.**
**4409 Andre Street**
**Midland Michigan 48640(US)**

(74) Representative: **Raynor, John et al**
**W.H. Beck, Greener & Co 7 Stone Buildings**
**Lincoln's Inn**
**London WC2A 3SZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.08/2.19/2.0)

**PATENT ABSTRACTS OF JAPAN**, vol. 7, no. 77 (C-159)[1222], 30th March 1983; & JP-A-58 8511 (TOYO BOSEKI K.K.) 18-01-1983; & **CHEMICAL ABSTRACTS**, vol. 98, no. 26, 27th June 1983, page 37, no. 216520r, Columbus, Ohio, US; & JP-A-58 08 511 (TOYOBO CO., LTD) 18-01-1983

## Description

This invention relates to novel membranes with a thin non-porous discriminating layer comprising a tetrabromo bisphenol based polyestercarbonate. Further disclosed is a process for separating oxygen from a gas mixture comprising oxygen and nitrogen using such membranes.

In various industries, it is necessary or highly desirable to separate one component from another in a gaseous stream. Processes used to perform such separations include pressure swing absorption and membrane separations. In a membrane separation, a gaseous stream containing the components to be separated is contacted with a membrane, wherein the membrane separates two regions in a manner such that only those materials which permeate through the membrane can communicate from one region to the other. Such membranes are semi-permeable, in that one component of the gaseous mixture selectively permeates through the membrane at a rate much higher than one or more of the components in the gaseous stream. The gaseous mixture is contacted with the membrane in a manner such that the selectively permeable species is preferentially transported through the membrane to the other region. It is to be noted that the component from which the selectively permeable species is to be separated may in fact permeate through the membrane at a much slower rate than the selectively permeable species. It is this difference in rates of permeation which is used to separate the gaseous species or reduce the concentration of the less selectively permeated species in the region to which the permeating gases permeate.

In such separations, the relative rate of permeation, that is, the difference in rate of permeation between the selectively permeating gas and the non-selectively permeating gas, is a major factor in the separation achieved. The higher the ratio of permeation of the selectively permeable gas over the non-selectively permeable gas, the better the membrane will perform. Therefore, it is desirable to have as high a ratio as possible.

Presently, membranes derived from acetate esters, for example cellulose triacetate, and olefins, for example polyethylene, polypropylene, poly(-4-methyl- pentene-1), are used for gas separations. Among such separations are the separation of oxygen from nitrogen, and carbon dioxide from methane.

Some of the materials used in membranes suffer from certain disadvantages. One such problem is the inability to perform under extreme conditions, such as high temperatures and pressures. As a result, certain separations are limited by the membrane as to the temperatures and pressures which may be used.

What are needed are membranes with a higher relative rate of permeation through the membrane of the selectively permeating species over the non-selectively permeating species. Further what is needed is a membrane which has enhanced mechanical strength so as to withstand more extreme temperatures and pressures.

The invention is a membrane comprising a polyestercarbonate and preferably having a dense skin, wherein the diphenolic residue in the backbone of the polyestercarbonate is a tetrabromo diphenolic residue, wherein the membrane has a separation factor for oxygen and nitrogen of 6.5 or greater at about 24 ° C.

In another aspect, the invention is a method of separating oxygen from a mixture of gases comprising nitrogen and oxygen, wherein the method comprises (a) contacting the gas mixture with a membrane comprising a polyestercarbonate described hereinbefore under conditions such that the oxygen selectively permeates through the membrane to the other side of the membrane; and (b) removing the permeated oxygen from the other side of the membrane, wherein separation factor for the oxygen and nitrogen is 6.5 or greater at about 24 ° C.

The membranes of this invention demonstrate surprisingly high separation factors for oxygen and nitrogen separations. The membranes of this invention have good mechanical properties and therefore are useful under more extreme conditions, for example temperature and pressure, than many commercially used membranes.

The membranes of this invention are prepared from polyestercarbonates, wherein the polyestercarbonates are prepared from bisphenols which are tetrabromo substituted. Such polyestercarbonates contain both ester linkages and carbonate linkages as functional groups in the backbone of the polymer. These polymers are prepared generally by reacting a bisphenol with a dicarboxylic acid or dicarboxylic acid halide and phosgene. The polymers of this invention are randomized copolymers, wherein randomized refers herein to the fact that the ester and carbonate functional groups appear in a random arrangement along the backbone of the polymer.

Polyestercarbonates from which the membranes of this invention are prepared include those which correspond to the formula

(I)

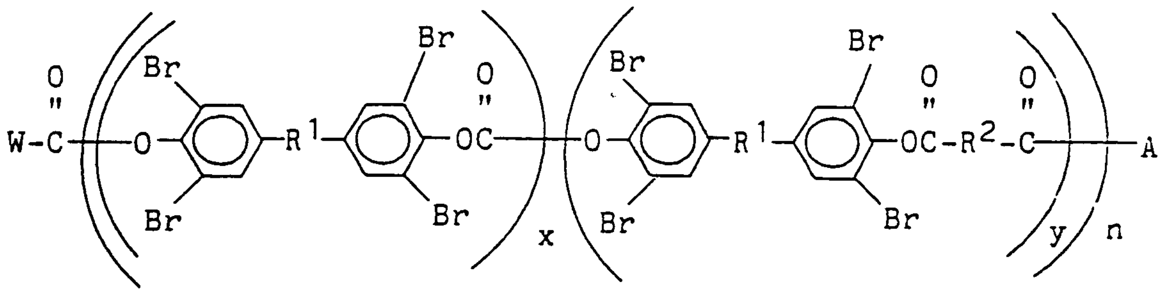

wherein
A is

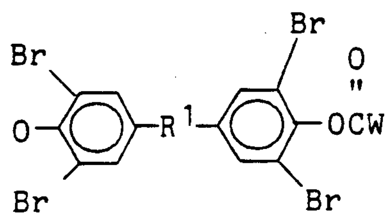
;

$R^1$ is separately in each instance -CO-, $-SO_2-$, -O-, a single direct bond, a $C_{1-6}$ divalent hydrocarbon radical, $C_{1-6}$ divalent fluorocarbon radical, or an inertly substituted $C_{1-6}$ divalent hydrocarbon radical;
$R^2$ is separately in each instance a $C_{1-20}$ divalent hydrocarbon radical or a $C_{1-20}$ divalent hydrocarbon radical, substituted with one or more halo moieties;
W is the residue of a monofunctional compound which is reactive with a chloroformate functionality;
x is 0 or 1;
y is 0 or 1;
n is 50 or greater;
with the proviso that the ratio of units wherein
x = 1 to units wherein y = 1 is between 99:1 to 1:99, inclusive.

In the hereinbefore presented formula, $R^1$ is preferably a direct bond, a $C_{1-6}$ divalent hydrocarbon radical, a $C_{1-6}$ divalent fluorocarbon radical, or an inertly substituted divalent $C_{1-6}$ hydrocarbon radical. More preferably, $R^1$ is a divalent $C_{1-6}$ hydrocarbon radical. Even more preferably, $R^1$ is a divalent $C_{1-6}$ alkylidene. $R^1$ is most preferably propylidene.

$R^2$ is preferably a divalent $C_{1-20}$ aliphatic, $C_{5-20}$ cycloaliphatic, $C_{6-20}$ aromatic, a halo-substituted $C_{6-20}$ aromatic, a halo-substituted $C_{1-20}$ aliphatic, or a halo-substituted $C_{5-20}$ cycloaliphatic hydrocarbon. $R^2$ is more preferably a divalent $C_{5-20}$ cycloaliphatic, a $C_{6-20}$ aromatic, a halo-substituted $C_{5-20}$ cycloaliphatic, or a $C_{6-20}$ halo-substituted aromatic hydrocarbon. $R^2$ is more preferably

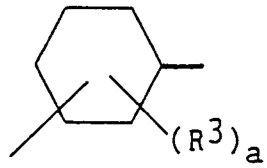

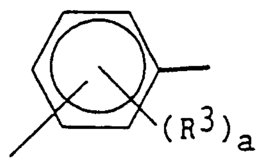

or

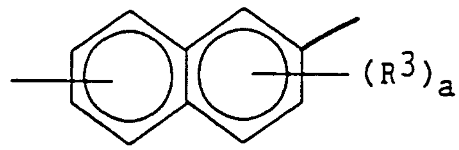

wherein

- $R^3$ is separately in each occurrence chlorine, fluorine, phenyl, or halogenated alkyl; and
- a is 0 to 4.
- $R^2$ is most preferably

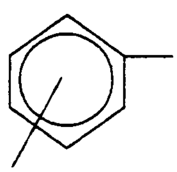

W is preferably the residue of a monofunctional aliphatic alcohol, thiol, aromatic alcohol, or amine. W is more preferably the residue of a monofunctional phenol or alcohol.

W is even more preferably a $C_{1-20}$ hydrocarbyloxy radical. W is even more preferably $C_{1-20}$ alkoxy, $C_{6-10}$ aryloxy, and $C_{7-20}$ alkyl-substituted aryloxy. W is most preferably paratertiarybutyl phenyloxy or methoxy.

Preferably, a is 0 or 1, and most preferably 0.

Preferably, the polymers useful in this invention have an inherent viscosity of between 0.3 and 1.2. Below the inherent viscosity of 0.3 it is difficult to prepare the film useful as a membrane. Above the inherent viscosity of 1.2, the polymer becomes difficult to work with.

Such polymers can have a ratio of ester to polycarbonate groups of from 99:1 to 1:99, more preferably, between 10:90 and 90:10. Most preferably, the ratio of ester-to-carbonate functional groups in the backbone of the polymer is between 15:85 and 85:15.

Bisphenols useful in the preparation of the polyestercarbonate polymers used to make the membranes of this invention include any bisphenolic compounds which are tetrabromo-substituted. Preferred tetrabromo-substituted bisphenolic compounds correspond to the formula

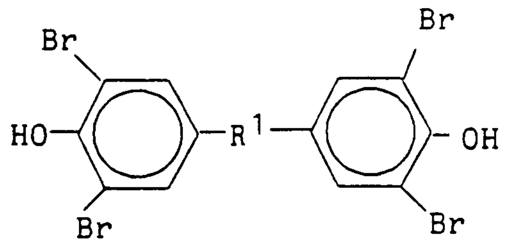

(II)

wherein $R^1$ is as hereinbefore defined. Examples of such bisphenolic compounds include 3,3′, 5,5′-tetrabromo-4,4′-dihydroxybiphenyl, 2,2-bis(3,5-dibromo-4-hydroxyphenyl)propane, and 2,2-bis(3,5-dibromo-4-hydroxphenyl)hexafluoropropane. The most preferred bisphenol compound is 2,2-bis(3,5-dibromo-4-hydroxyphenyl)propane (commonly known as tetrabromo bisphenol A (TBBA)). The tetrabromo bisphenol compound is reacted with an ester forming agent which is difunctional so as to form ester functional groups with the bisphenolic compound. To form polyestercarbonates, this reaction occurs in the further presence of phosgene so that the bisphenolic compound will react with phosgene to form carbonate units. Preferred ester forming groups are dicarboxylic acids and dicarboxylic acid halides. Such dicarboxylic acids or dicarboxylic acid halides are $C_{1-20}$ hydrocarbons substituted with two carboxylic acid or carboxylic acid halide moieties. More preferred, esterifying agents include $C_{1-20}$ aliphatic dicarboxylic acids, $C_{1-20}$ aliphatic dicarboxylic acid halides, $C_{5-20}$ cycloaliphatic carboxylic diacids, $C_{5-20}$ cycloaliphatic dicarboxylic acid halides, $C_{6-20}$ aromatic carboxylic diacids, $C_{6-20}$ aromatic carboxylic diacid halides, a halo-substituted $C_{6-20}$ aromatic carboxylic acid, a halo-substituted $C_{6-20}$ aromatic dicarboxylic acid halide, a halo-substituted $C_{1-20}$ aliphatic dicarboxylic acid, a halo-substituted $C_{1-20}$ aliphatic dicarboxylic acid halide, a halo-substituted $C_{5-20}$ cycloaliphatic dicarboxylic acid, or a halo-substituted $C_{5-20}$ cycloaliphatic dicarboxylic acid halide. The preferred class of esterifying agents is the dicarboxylic acid halides, with the preferred class of dicarboxylic

acid halides being the dicarboxylic acid chlorides. A preferred group of dicarboxylic acid halides useful as esterifying agents in this invention include those corresponding to the formulas

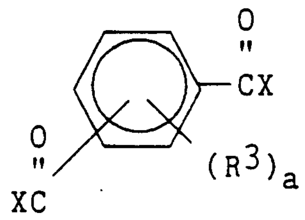

(III)

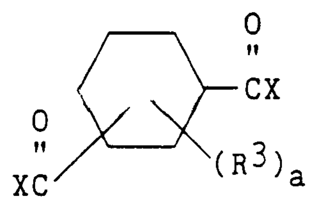

(IV)

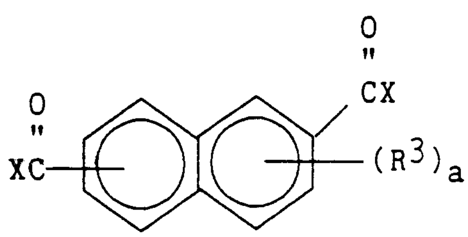

(V)

wherein X is a halogen, and $R^3$ and a are as hereinbefore defined. Examples of dicarboxylic acid halides useful in this invention include 1,4-cyclohexane dicarboxylic acid chloride, 1,4-cyclohexane dicarboxylic acid bromide, 1,3-cyclohexane dicarboxylic acid chloride, or 1,3-cyclohexane dicarboxylic acid bromide, terephthaloyl chloride, terephthaloyl bromide, isophthaloyl chloride, isophthaloyl bromide, or 2,6-naphthylene dicarboxylic acid chloride or bromide. More preferred acid halides are terephthaloyl chloride, isophthaloyl chloride, 1,4-cyclohexane dicarboxylic acid chloride, and 2,6-naphthylene dicarboxylic acid chloride. The most preferred acid halides are terephthaloyl chloride, isophthaloyl chloride, or mixtures thereof.

In one preferred embodiment, a mixture of terephthaloyl chloride and isophthaloyl chloride is used as the esterifying agent. The ratio of terephthaloyl chloride to isphthaloyl chloride can be between 100:0 and 0:100, and most preferably between 80:20 and 20:80.

Generally, a chain stopping agent is added to the reaction mixture to control the viscosity. The concentration of the chain stopping agent in the reaction mixture has a direct effect on both the molecular weight and the viscosity of the polyestercarbonate prepared. Chain stopping agents are monofunctional compounds which react with a chloroformate site on the backbone of the polymer and by such reaction ends the propagation of the polymer at such a point. Preferable chain stopping agents include monofunctional compounds which are reactive with a chloroformate functionality. Examples of more preferred chain stopping compounds include monofunctional aromatic alcohols, thiols, and amines. Even more preferred chain stopping agents are aromatic alcohol compounds and aliphatic alcohols.

The polyester polycarbonates of this invention are prepared by any process well known in the art. One preferred process is known as the solution process wherein the bisphenol in a chlorinated solvent in the presence of a tertiary amine acid acceptor is contacted with a dicarboxylic acid or dicarboxylic acid chloride in the presence of phosgene with agitation. Further descriptions of the solution process can be found in U.S. Patent Nos. 4,194,038, 3,028,365, and 4,310,652. See also P. W. Morgan, Condensation Polymers: By Interfacial and Solution Methods, (Interscience, 1965), page 325-393. Another preferred process for the preparation of polyestercarbonates is an interfacial process, wherein an aqueous bisphenolate solution having a pH of at least 8 is mixed with phosgene and an organic solution of an acid halide which solution is immiscible with the aqueous bisphenolate solution, at a sufficient temperature for a sufficient time and under

sufficient agitation to react said phosgene and said acid halide with said bisphenolate and to form an amorphous polymer. The sufficient temperature is well known in the art and, generally, is between 0 ° C and 50 ° C. The aqueous phase is separated from the organic phase containing the amorphous polymer. The organic phase is washed with an aqueous liquid, and the substantially amorphous melt processable polyestercarbonate polymer is recovered from the washed organic phase. The organic phase may be based upon any conventional organic solvent for the product polymer. A preferred group of solvents are the chlorinated aliphatic hydrocarbons of 1-4 carbons such as methyl chloride, dichloromethane, chloroform, carbon tetrachloride, dichloroethane, trichloroethane, trichloroethylene, tetrachloroethylene, and mixtures thereof. Another preferred group of solvents is the chlorinated and non-halogenated aromatic hydrocarbons such as toluene, monochlorobenzene, dichlorobenzene, and mixtures thereof. Preferred solvents are the chloromethanes, and especially dichloromethane. The bisphenols useful in this invention are converted to bisphenolates by dissolving the bisphenol in water with an inorganic base, especially in an aqueous or alkaline earth metal hydroxide, preferably an alkali metal hydroxide, and more preferably sodium hydroxide. Further description of interfacial processes can be found in U.S. Patent Nos. 3,169,121, 3,030,331, 3,028,364, 4,156,069, 3,207,814, 4,255,556, and 4,311,822. See also P. W. Morgan, Supra.

The ratio of acid halide to phosgene generally controls the relative ratio of ester to carbonate units, with the higher ratio of acid halides giving a higher ester content and vice versa. Generally, the molar ratio of phosgene to acid halide or carboxylic acid can be between 0.02:1 and 20:1.

In one more preferred embodiment, the membranes useful in this invention are prepared from tetrabromo bisphenol A and a mixture of terephthaloyl chloride and isophthaloyl chloride. Such polymers generally correspond to the formula

(VI)

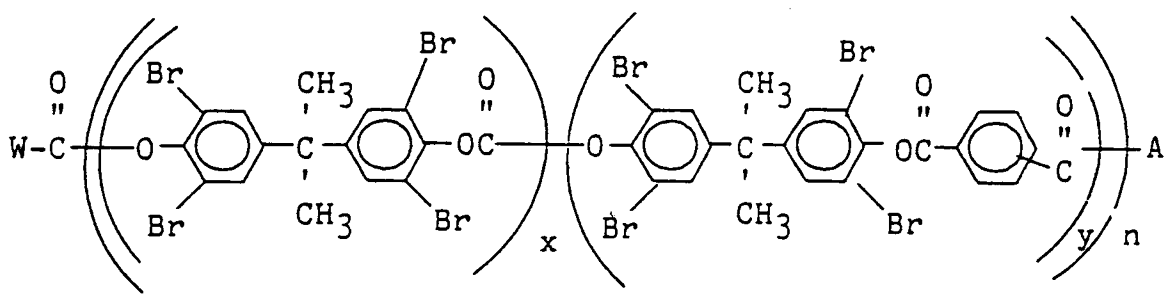

wherein A, W, x, and y are as hereinbefore defined.

The novel membranes of this invention can take any form known to one skilled in the art. In particular, the membrane may be a homogeneous membrane, a composite membrane, or an asymmetric membrane. Furthermore, the membranes may be in the form of a flat sheet, a hollow tube, or a hollow fiber. One skilled in the art would readily know how to prepare a membrane in any of the aforementioned forms. As used herein, the term semi-permeable membrane refers to a membrane which displays different permeabilities for different species of molecules, and therefore, may be used in the separation of ions and molecules having different permeabilities across the membrane. Permeate as used herein refers to those species which permeate through the membrane at a much faster rate than other species. Non-permeate refers herein to those species which permeate at a much slower rate than the other species present.

Preferably, the membranes of this invention are asymmetric or composite membranes, and most preferably asymmetric membranes.

Homogeneous and composite membranes are prepared by forming a thin, discriminating layer which is dense and free of voids and pores. Such membranes or layers have generally the same structure and composition throughout the membrane. In one preferred embodiment, the polyestercarbonates of this invention are dissolved in a water-miscible solvent, for example dimethylformamide or dimethylacetamide. Preferably, the solution contains polymer in weight percents of between 10 and 80. The form into which the membrane is to be formed affects the membrane casting solution composition. To form a flat sheet membrane solution with between 10 and 20 percent by weight of the polymer is more preferred, with between 15 and 20 percent being most preferred. To prepare a hollow fiber membrane, the casting solution comprises preferably between 50 and 80 percent by weight of polymer. This solution should have sufficient

viscosity to allow casting of the solution onto a flat surface. The solution should be homogeneous. Thereafter, the polymer is cast on a surface, and in the case of a homogeneous membrane on a surface from which the finished membrane may readily be separated. A convenient way of carrying out this operation is either by casting the membrane solution onto a support surface which may be dissolved away from the finished film following the drying and curing step or by casting the membrane onto a support having low surface energy, such as silicone, coated glass, or a surface to which the membrane will not adhere, such as mercury. Casting is done by pouring the solution onto the appropriate surface and sizing using the appropriate tool, to form a solution of the appropriate thickness. Thereafter, the cast solution is exposed to drying or curing conditions. Such conditions are used to remove the solvent thereby leaving a thin, discriminating layer of polymer which is homogeneous. The solution can be dried either by exposing to a vacuum, exposing to elevated temperatures, by allowing the solvent to evaporate by time, or any combination thereof. Generally, it is preferable to expose the cast solution to elevated temperatures, (any temperature at which the solvent evaporates at a reasonable period of time and which is below the glass transition temperature of the polymer is suitable), preferably less than 100°C. In a more preferred embodiment, the temperature used is 80°C. In one preferred embodiment, such exposure is done in a vacuum oven or under vacuum conditions at elevated temperatures. This drying is performed over a period sufficient to remove the solvent, preferably between 24 and 48 hours. Preferably, the homogeneous membrane has a thickness of between 0.5 mils (12.7μ) and 10.0 mils (254μ), and most preferably between 1 mil (25μ) and 3 mils (76μ).

To prepare a composite membrane, a homogeneous thin, discriminating layer can be formed, and thereafter adhered to a porous support after formation. Alternatively, the porous support can be the surface upon which the membrane is cast. In such embodiment, composite membrane is prepared by casting a forming solution as a uniform coating on the porous support which forms the support layer for the finished membrane. Penetration of the polymer from which the thin, discriminating layer is formed into pores of the porous supporting layer and the layer itself is acceptable so long as the desired thickness of the semi-permeable membrane is not exceeded. In a composite membrane, the membrane is supported on a porous substrate or structure. This porous supporting layer is characterized in that it does not greatly impede the transport across this layer of all components of a fluid in contact with the porous layer. The porous supporting layer can comprise a discriminating layer which impedes the transportation of some fluid components to the discriminating layer, but generally this second discriminating layer is not necessary or desirable. In one embodiment, the supporting layer can be a metal or polymeric plate with a plurality of holes drilled through it. However, such a drill plate is not advantageous because it can significantly reduce the effective area of the membrane. In a preferred embodiment, the porous supporting layer is a very porous polymer membrane. Illustrative of such polymeric supporting layers are cellulose ester and microporous polysulfone membranes. Such membranes are commercially available under the trade names MILLIPORE, PELLICON and DIAFLOW . Where such supporting membranes are thin or highly deformable, a frame may also be necessary to adequately support the semi-permeable membrane. In one especially preferred embodiment, the polymeric supporting layer is a hollow fiber of a microporous polymer such as polysulfone, cellulose acetate, or some other cellulose ester. The hollow fiber itself provides adequate support for the semi-permeable membrane layer coated on the inside or outside surface of the fiber. Polysulfone hollow fibers are most preferred for this application. After the solution useful in forming the thin, discriminating layer is cast on the porous support, the porous support and solution cast thereon are then exposed to conditions for removal of the solvent so as to form the dense skin. Such conditions are similar to those described hereinbefore for the formation of the homogeneous membrane.

To form an asymmetric membrane, a solution is cast as described hereinbefore, and thereafter the cast solution is partially cured to remove a portion of the solvent. Thereafter, one or both surfaces of the partially dried membrane is contacted with a water quench so as to form a thin, non-porous, discriminating layer on one or both sides of the membrane under conditions such that the solvent away from the dense layer communicates to the dense layer forming pores in the remainder of the membrane, thereby forming an asymmetric membrane. Such porous layer is present to provide support for the thin, discriminating layer without impeding the transport of the fluid containing the components to be separated through semi-permeable, thin, discriminating layer. The partial curing step is performed in a manner similar to the curing step described with respect to the formation of homogeneous membranes.

Hollow fiber membranes can be formed by spinning fibers from an appropriate solution of the polycarbonate in a water-miscible solvent. Such spinning is well known to those skilled in the art, and the formation of hollow fibers which are homogeneous, asymmetric, or composite membranes, requires the adaptation of the hereinbefore described procedures to the hollow fiber form of the membrane. Such adaptations are well within the skill of the art.

Generally, the thin, discriminating layer in a composite or asymmetric form of a membrane has a thickness of between 0.05μ and 10μ, more preferably, between 0.2μ and 2μ.

Under certain conditions, it may be highly desirable to provide support to the membrane when the membrane is employed in a separation apparatus or process. In one embodiment, the peripheral area of the membrane is affixed to a framing structure which supports the outer edge of the membrane. The membrane can be affixed to the framing structure by a clamping mechanism, adhesive, chemical bonding, or other techniques known in the prior art. The membrane affixed to the frame can then be sealingly engaged in the conventional manner in a vessel so that the membrane surface inside the framing support separates two otherwise non-communicating compartments in the vessel. The skilled artisan will recognize that the structure which supports the membrane can be an integral part of the vessel or even the outer edge of the membrane.

In one embodiment, this invention is a method for separating oxygen from nitrogen which comprises contacting a gaseous stream containing oxygen and nitrogen with the membrane of this invention under conditions such that oxygen selectively permeates through the membrane, in comparison to nitrogen. Preferably, the membrane is sealingly engaged to a vessel which defines a space communicating with only one side of the membrane, such that the permeable oxygen contacting the other side of the membrane can permeate through the membrane to the non-communicating space, at a significantly faster rate than the nitrogen communicates or permeates through the membrane. Preferably, the oxygen and nitrogen are a part of an air stream. Preferably, the pressure on the communicating side of the membrane is between 40 psia (275 kPa) and 200 psia (1379 kPa), more preferably between 80 psia (551 kPa) and 120 psia (827 kPa). The temperature at which the mixed oxygen and nitrogen stream is contacted with the membrane is between 0 and 80°C, most preferably between 5 and 45°C. The pressure differential across the membrane is preferably between 40 psia (275 kPa) and 200 psia (1379 kPa), and more preferably between 95 psia (655 kPa) and 120 psia (827 kPa). In one preferred embodiment, the membrane is in a hollow fiber form. Wherein the embodiment wherein the membrane is in hollow fiber form, it is preferable to contact the mixed nitrogen and oxygen stream with a membrane on the outside of the hollow fiber under conditions such that the oxygen selectively permeates into the hollow fibers and a stream which is rich in oxygen is taken off of the end of the hollow fiber. This oxygen enriched stream can be further oxygen enriched by contacting with one or more membranes in succession.

The separation membrane exhibits a separation factor for oxygen over nitrogen of at least 6.5. In a more preferred embodiment, the separation factor is at least 7.0 at 20°C.

In certain embodiments, the separations of oxygen from nitrogen occurs at lower temperatures, preferably at 10°C or below. It has been discovered that the membranes useful in this invention have surprisingly high separation factors at 10°C or below. Such separation factors are preferably 8.0 or greater at 10°C or below, and more preferably 8.5 or greater at 10°C or below.

The following examples are included for illustrative purposes only. Unless otherwise stated, all parts and percentages are by weight.

## Example 1 - Tetrabromo Bisphenol A Polyestercarbonate With 20 Percent Ester Functionality

### Polymerization Procedure

A three-neck, 1.0 liter, round-bottom flask, equipped with a thermometer, air-driven stirrer and glass funnel, was charged with 500 $cm^3$ of methylene chloride, 108.8 grams (0.2 mole) of 3,3′, 5,5′-tetrabromo bisphenol A, 2.3 grams (0.01 mole) of isophthaloyl chloride, 2.3 grams (0.01 mole) of terephthaloyl chloride, 0.3 grams (0.002 mole) of p-tertiary butyl phenol and 42 $cm^3$ (0.52 moles) of pyridine. The resultant clear, pale yellow solution was stirred under a nitrogen atmosphere for ten minutes. Moderate stirring was continued and 21 grams (0.21 mole) of phosgene were bubbled into the reaction over a 75 minute period.

The pale yellow, turbid solution was then scavenged with methanol, neutralized with dilute hydrochloric acid and washed a second time with dilute hydrochloric acid. The slightly opaque solution was clarified by passing it through a Dowex® MSC ion exchange resin bed and precipitated in methanol. The precipitated polymer was dried under vacuum at 80°C for 24 hours. The resultant polymer was found to have an inherent viscosity of 0.37 dL/g 3.7 x $10^{-3}$ ℓ/Kg at 25°C in methylene chloride.

Film Preparation and Testing Procedure

Two grams of polymer were dissolved in 18 grams of methylene chloride, passed through a course, fritted glass filter onto a clean glass plate and drawn down with a casting blade. The sample was covered until dry, removed from the glass plate and annealed under vacuum at 80°C for 48 hours.

From a cast film, a small disc was removed, the mean thickness and standard deviation were determined and the film was then placed in the cell of a fixed volume-variable pressure gas permeability apparatus. Both sides of the membrane were evacuated overnight. One side of the membrane was pressurized with nitrogen at 184 kPaG and the downstream pressure increase was monitored with a pressure transducer and recorded on a single-pen recorder. Gas permeability coefficients were calculated from the slope of the time-pressure curve.

Identical procedures were followed with each gas tested using the following sequence of test gases: nitrogen, methane, nitrogen, oxygen, helium, carbon dioxide. The results are compiled in the Table.

Example 2 - Tetrabromo Bisphenol A Polyestercarbonate With 50 Percent Ester Functionality

Polymerization Procedure

A three-neck, 1.0 liter, round-bottom flask, equipped with a thermometer, air-driven stirrer and glass funnel, was charged with 500 $cm^3$ of methylene chloride, 108.8 grams (0.2 mole) of 3,3′, 5,5′-tetrabromo bisphenol A, 12.5 grams (0.054 mole) of isophthaloyl chloride, 1.4 grams (0.006 mole) of terephthaloyl chloride, 0.6 grams (0.004 mole) of p-tertiary butyl phenol and 42 $cm^3$ (0.52 mole) of pyridine. The resultant clear, pale yellow solution was stirred under a nitrogen atmosphere for ten minutes. Moderate stirring was continued and 16 grams (0.16 mole) of phosgene were bubbled into the reaction over a 65 minute period.

The pale yellow, turbid solution was then scavenged with methanol, neutralized with dilute hydrochloric acid and washed a second time with dilute hydrochloric acid. The slightly opaque solution was clarified by passing it through a Dowex® MSC ion exchange resin bed and precipitated in methanol. The precipitated polymer was dried under vacuum at 80°C for 24 hours. The resultant polymer was found to have an inherent viscosity of 0.37 dL/g 3.7 x $10^{-3}$ ℓ/Kg at 25°C in methylene chloride.

Film Preparation and Testing Procedure

Two grams of polymer were dissolved in 18 grams of methylene chloride, passed through a course, fritted glass filter onto a clean glass plate and drawn down with a casting blade. The sample was covered until dry, removed from the glass plate and annealed under vacuum at 80°C for 48 hours.

From a cast film, a small disc was removed, the mean thickness and standard deviation were determined and the film was then placed in the cell of a fixed volume-variable pressure gas permeability apparatus. Both sides of the membrane were evacuated overnight. One side of the membrane was pressurized with nitrogen at 184 kPaG and the downstream pressure increase was monitored with a pressure transducer and recorded on a single-pen recorder. Gas permeability coefficients were calculated from the slope of the time-pressure curve.

Identical procedures were followed with each gas tested using the following sequence of test gases: nitrogen, methane, nitrogen, oxygen, helium, carbon dioxide. The results are compiled in the Table.

Example 3 - Tetrabromo Bisphenol A Polyestercarbonate With 67 Percent Ester Functionality

Polymerization Procedure

A three-neck, 2.0 liter, round-bottom flask, equipped with a thermometer, air-driven stirrer and glass funnel, was charged with 1,000 $cm^3$ of methylene chloride, 222 grams (0.41 mole) of 3,3′, 5,5′-tetrabromo bisphenol A, 8.3 grams (0.036 mole) of isophthaloyl chloride, 33.1 grams (0.143 mole) of terephthaloylchloride, and 86 $cm^3$ (1.07 moles) of pyridine. The resultant clear, pale yellow solution was stirred under a nitrogen atmosphere for ten minutes. Moderate stirring was continued and 28 grams (0.28 moles) of phosgene are bubbled into the reaction over a 41 minute period.

The pale yellow, turbid solution was then scavenged with methanol, neutralized with dilute hydrochloric acid and washed a second time with dilute hydrochloric acid. The slightly opaque solution was clarified by passing it through a Dowex® MSC ion exchange resin bed and precipitated in methanol. The precipitated polymer was dried under vacuum at 80°C for 24 hours. The resultant polymer was found to have an inherent viscosity of 0.62 dL/g ($6.2 \times 10^{-3}$ ℓ/Kg) at 25°C in methylene chloride.

Film Preparation and Testing Procedure

Two grams of polymer were dissolved in 18 grams of methylene chloride, passed through a course, fritted glass filter onto a clean glass plate and drawn down with a casting blade. The sample was covered until dry, removed from the glass plate and annealed under vacuum at 80°C for 48 hours.

From a cast film, a small disc was removed, the mean thickness and standard deviation were determined and the film was then placed in the cell of a fixed volume-variable pressure gas permeability apparatus. Both sides of the membrane were evacuated overnight. One side of the membrane was pressurized with nitrogen at 184 kPaG (285 kPa) and the downstream pressure increase was monitored with a pressure transducer and recorded on a single-pen recorder. Gas permeability coefficients were calculated from the slope of the time-pressure curve.

Identical procedures were followed with each gas tested using the following sequence of test gases: nitrogen, methane, nitrogen, oxygen, helium, carbon dioxide. The results are compiled in the Table.

Example 4 - Tetrabromo Bisphenol A Polyestercarbonate With 80 Percent Ester Functionality

Polymerization Procedure

A three-neck, 5.0 liter, round-bottom flask, equipped with a thermometer, air-driven stirrer and glass funnel, was charged with 2,000 $cm^3$ of methylene chloride, 450 grams (0.83 mole) of 3,3′, 5,5′-tetrabromo bisphenol A, 22.4 grams (0.097 mole) of isophthaloyl chloride, 89.6 grams (0.386 mole) of terephthaloyl chloride, and 200 $cm^3$ (2.48 moles) of pyridine. The resultant clear, pale yellow solution was stirred under a nitrogen atmosphere for ten minutes. Moderate stirring was continued and 38 grams (0.38 mole) of phosgene were bubbled into the reaction over a 32 minute period.

The pale yellow, turbid solution was then scavenged with methanol, neutralized with dilute hydrochloric acid and washed a second time with dilute hydrochloric acid. The slightly opaque solution was clarified by passing it through a Dowex® MSC ion exchange resin bed and precipitated in methanol. The precipitated polymer was dried under vacuum at 80°C for 24 hours. The resultant polymer was found to have an inherent viscosity of 0.80 dL/g $8.0 \times 10^{-3}$ ℓ/Kg at 25°C in methylene chloride.

Film Preparation and Testing Procedure

Two grams of polymer were dissolved in 18 grams of methylene chloride, passed through a course, fritted glass filter onto a clean glass plate and drawn down with a casting blade. The sample was covered until dry, removed from the glass plate and annealed under vacuum at 80°C for 48 hours.

From a cast film, a small disc was removed, the mean thickness and standard deviation were determined and the film was then placed in the cell of a fixed volume-variable pressure gas permeability apparatus. Both sides of the membrane were evacuated overnight. One side of the membrane was pressurized with nitrogen at 184 kPaG (285 kPa) and the downstream pressure increase was monitored with a pressure transducer and recorded on a single-pen recorder. Gas permeability coefficients are calculated from the slope of the time-pressure curve.

Identical procedures were followed with each gas tested using the following sequence of test gases: nitrogen, methane, nitrogen, oxygen, helium, carbon dioxide. The results are compiled in the Table.

| Example | Percent Ester* | T/I ratio[2] | P[1] $O_2$ | P[1] $N_2$ | Separation[3] Factor | P[1] $CH_4$ | P[1] $CO_2$ | Separation[4] Factor | P[1] He |
|---|---|---|---|---|---|---|---|---|---|
| 1 | 20% | 1/1 | 0.97 | 0.14 | 7.2 | 0.089 | 3.55 | 40 | 10.8 |
| 2 | 50% | 1/9 | 0.96 | 0.13 | 7.2 | 0.095 | 3.73 | 39 | 11.8 |
| 3 | 67% | 8/2 | 1.08 | 0.16 | 6.7 | 0.14 | 4.75 | 33 | 10.3 |
| 4 | 80% | 8/2 | 1.23 | 0.17 | 7.2 | 0.14 | 5.26 | 39 | 11.4 |

1. P is permeability in the units of barrers ($cm^3$-cm/$cm^2$s-cm-Hg) x $10^{10}$ (1cmHg = 13.3 N/$m^2$)

2. Terephthaloyl chloride to isophthaloyl chloride ratio

3. Separation factor for oxygen and nitrogen $PO_2/PN_2$

4. Separation factor for carbon dioxide and methane $PCO_2/PCH_4$

* Functionality

## Claims

1. A membrane comprising a polyestercarbonate of the formula

(I)

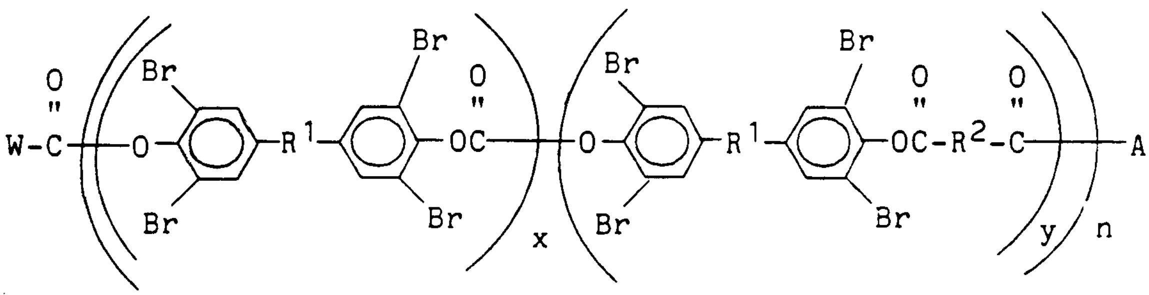

wherein
A is

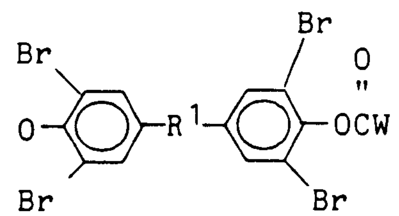 ;

wherein the membrane has a separation factor for oxygen and nitrogen of 6.5 or greater at 24 ° C.
each $R^1$ independently is -CO-, -$SO_2$-, -O-, a single direct bond, a $C_{1-6}$ divalent hydrocarbon radical, a $C_{1-6}$ divalent fluorocarbon radical, or an inertly substituted $C_{1-6}$ divalent hydrocarbon radical;
each $R^2$ independently is a $C_{1-20}$ divalent hydrocarbon radical or a $C_{1-20}$ divalent hydrocarbon radical , substituted with one or more halo moieties;
W is the residue of a monofunctional compound which is reactive with a chloroformate functionality;
x is 0 or 1;
y is 0 or 1;
n is 50 or greater; and
with the proviso that the ratio of units wherein x = 1 to units wherein y = 1 is between 99:1 to 1:99, inclusive.

2. A membrane as claimed in Claim 1 wherein
each $R^1$ independently is a direct bond, a $C_{1-6}$ divalent hydrocarbon radical, a $C_{1-6}$ divalent fluorocarbon radical, or an inertly substituted divalent $C_{1-6}$ hydrocarbon radical;
each $R^2$ independently is a divalent $C_{1-20}$ aliphatic, $C_{5-20}$ cycloaliphatic, $C_{6-20}$ aromatic, a halo-substituted $C_{6-20}$ aromatic, a halo-substituted $C_{1-20}$ aliphatic, or a halo-substituted $C_{5-20}$ cycloaliphatic hydrocarbon radical; and
W is the residue of a monofunctional aliphatic alcohol, aromatic alcohol, thiol, or amine.

3. A membrane as claimed in Claim 2 wherein
each $R^1$ independently is a divalent $C_{1-6}$ hydrocarbon radical;
each $R^2$ independently is a divalent $C_{5-20}$ cycloaliphatic, $C_{6-20}$ aromatic radical, a halo-subtituted $C_{5-20}$ cycloaliphatic, or a $C_{6-20}$ halo-substituted aromatic hydrocarbon radical; and
W is a $C_{1-20}$ hydrocarbyloxy radical.

**4.** A membrane as claimed in Claim 3 wherein
each $R^1$ independently is a divalent $C_{1-6}$ alkylidene;
each $R^2$ independently is

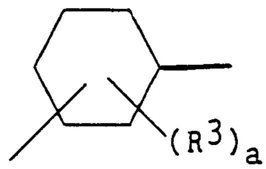

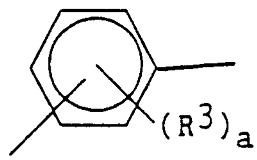

or

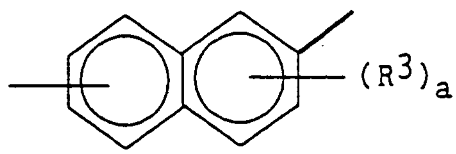

wherein
each $R^3$ independently is chlorine, fluorine, phenyl, or halogenated alkyl;
a is 0 to 4; and
W is a $C_{1-20}$ alkoxy, $C_{6-20}$ aryloxy, or $C_{7-20}$ alkyl-substituted aryloxy radical.

**5.** A membrane as claimed in Claim 4 wherein
each $R^1$ is propylidene;
each $R^2$ is

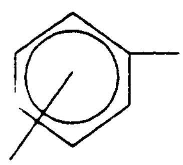
;

and
W is para-tertiary butylphenyloxy or methoxy.

**6.** A membrane as claimed in Claim 5 wherein the polyestercarbonate is derived from bisphenol A, and a mixture of terephthaloyl chloride and isophthaloyl chloride.

**7.** A method of separating oxygen from a mixture of gases containing oxygen and nitrogen, which method comprises:
(a) contacting the gas mixture with one side of a membrane as claimed in any one of Claims 1 to 6 while maintaining a pressure difference across the membrane with the lower pressure being on the other side of the membrane, and
(b) removing the permeated oxygen from the other side of the membrane.

**8.** A method as claimed in Claim 7 wherein the gas mixture is contacted with the membrane at a temperature of from 0° to 80°C and the pressure difference across the membrane is from 40 psig (275 kPa) to 200 pisg (1400 kPa).

9. The method of Claim 8 wherein the pressure difference across the membrane is from 95 pisg (650 kPa) to 120 pisg (830 kPa).

10. The method of Claim 8 or Claim 9 wherein the gas mixture is contacted with the membrane at a temperature of from 5° to 45°C.

**Revendications**

1. Membrane comprenant un polyestercarbonate de formule

(I)

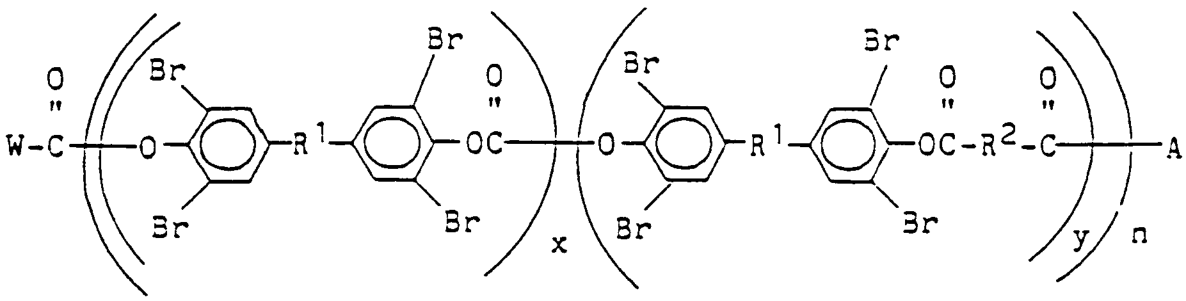

dans laquelle
A représente

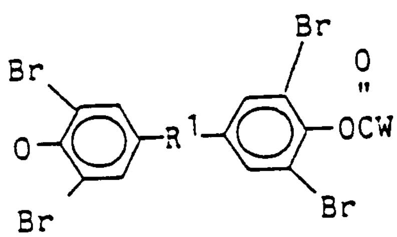

,

chaque $R^1$ représente indépendamment un groupe -CO-, $-SO_2-$, -O-, une liaison directe, un radical hydrocarboné bivalent en $C_{1-6}$, un radical fluorocarboné bivalent en $C_{1-6}$ ou un radical hydrocarboné bivalent en $C_{1-6}$ portant un ou des substituant(s) inerte(s),
chaque $R^2$ représente indépendamment un radical hydrocarboné bivalent en $C_{1-20}$ ou un radical hydrocarboné bivalent en $C_{1-20}$ substitué par un ou plusieurs fragments halogénés,
W est le résidu d'un composé monofonctionnel qui réagit avec une fonction chloroformiate,
x vaut 0 ou 1,
y vaut 0 ou 1,
n vaut 50 ou plus,
étant entendu que le rapport des unités dans lesquelles $x = 1$ aux unités dans lesquelles $y = 1$ est compris entre 99:1 et 1:99, bornes incluses, ladite membrane ayant un facteur de séparation relatif à l'oxygène et à l'azote de 6,5 ou plus à 24°C.

2. Membrane selon la revendication 1, dans laquelle
chaque $R^1$ représente indépendamment une liaison directe, un radical hydrocarboné bivalent en $C_{1-6}$, un radical fluorocarboné bivalent en $C_{1-6}$ ou un radical hydrocarboné bivalent en $C_{1-6}$ portant un ou des substituant(s) inerte(s),
chaque $R^2$ représente indépendamment un radical hydrocarboné bivalent aliphatique en $C_{1-20}$, cycloaliphatique en $C_{5-20}$, aromatique en $C_{6-20}$, aromatique en $C_{6-20}$ halogénosubstitué, aliphatique en

$C_{1-20}$ halogéno-substitué, ou cycloaliphatique en $C_{5-20}$ halogéno-substitué, et
W est le résidu d'un alcool aliphatique, d'un alcool aromatique, d'un thiol ou d'une amine monofonctionnel.

**3.** Membrane selon la revendication 2, dans laquelle
chaque $R^1$ représente indépendamment un radical hydrocarboné bivalent en $C_{1-6}$,
chaque $R^2$ représente indépendamment un radical hydrocarboné bivalent cycloaliphatique en $C_{5-20}$, aromatique en $C_{6-20}$, cycloaliphatique en $C_{5-20}$ halogéno-substitué, ou aromatique en $C_{6-20}$ halogéno-substitué, et
W est un radical hydrocarbyloxy en $C_{1-20}$.

**4.** Membrane selon la revendication 3, dans laquelle
chaque $R^1$ représente indépendamment un groupe alkylidène en $C_{1-6}$ bivalent,
chaque $R^2$ représente indépendamment

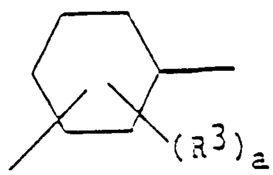

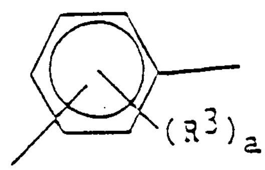

ou

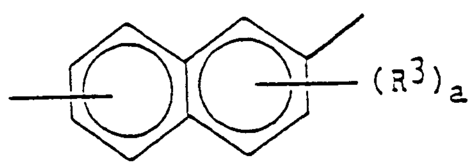

formules dans lesquelles
chaque $R^3$ représente indépendamment un atome de chlore, de fluor, ou un groupe phényle ou halogénoalkyle,
a présente une valeur de 0 à 4, et
W est un radical alcoxy en $C_{1-20}$ aryloxy en $C_{6-20}$, ou aryloxy substitué par alkyle, en $C_{7-20}$.

**5.** Membrane selon la revendication 4, dans laquelle
chaque $R^1$ représente un groupe propylidène,
chaque $R^2$ représente

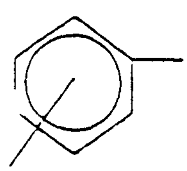

et
W représente un groupe para-tert.-butylphényloxy ou méthoxy.

**6.** Membrane selon la revendication 5, dans laquelle le polyestercarbonate est issu du bisphénol A, et d'un mélange de chlorure de téréphtaloyle et de chlorure d'isophtaloyle.

**7.** Procédé pour la séparation de l'oxygène à partir d'un mélange gazeux contenant de l'oxygène et de l'azote, lequel procédé comprend :

(a) la mise en contact du mélange gazeux avec une face d'une membrane selon l'une quelconque des revendications 1 à 6, une différence de pression étant maintenue entre les faces de la membrane, la pression la plus faible étant de l'autre côté de la membrane, et

(b) le prélèvement de l'oxygène qui a traversé, à partir de l'autre côté de la membrane.

**8.** Procédé selon la revendication 7, dans lequel le mélange gazeux est mis en contact avec la membrane à une température de 0° à 80°C et la différence de pression entre les faces de la membrane est de 40 psig (275 kPa) à 200 psig (1400 kPa).

**9.** Procédé selon la revendication 8, dans lequel la différence de pression entre les faces de la membrane est de 95 psig (650 kPa) à 120 psig (830 kPa).

**10.** Procédé selon la revendication 8 ou 9, dans lequel le mélange gazeux est mis en contact avec la membrane à une température de 50 à 45°C.

**Patentansprüche**

**1.** Membrane, enthaltend ein Polyestercarbonat der Formel

(I)

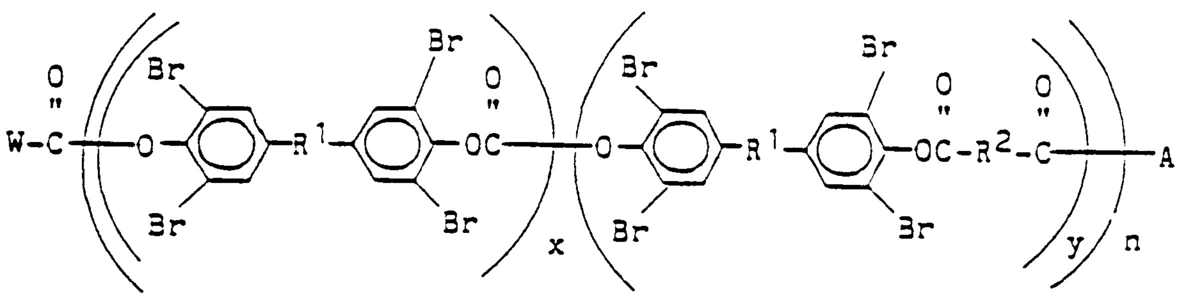

in der A

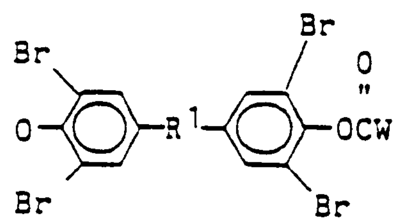

ist und die Membran für Sauerstoff und Stickstoff bei 24°C einen Trennfaktor von 6,5 oder größer aufweist, wobei

jedes $R^1$ unabhängig -CO-, -SO -, -O-, eine einzelne direkte Bindung, ein zweiwertiger Kohlenwasserstoffrest mit 1-6 Kohlenstoffatomen, ein zweiwertiger Fluorkohlenwasserstoffrest mit 1-6 Kohlenstoffatomen oder ein inert substituierter Zweiwertiger Kohlenwasserstoffrest mit 1-6 Kohlenstoffatomen ist,

jedes $R^2$ unabhängig ein zweiwertiger Kohlenwasserstoffrest mit 1-20 Kohlenstoffatomen oder ein mit einem oder mehreren Halogengruppen substituierter zweiwertiger Kohlenwasserstoffrest mit 1-20 Kohlenstoffatomen ist,

W der Rest einer monofunktionellen Verbindung ist, die mit Chlorformiatfunktionalität umsetzbar ist,

x ist 0 oder 1,

y ist 0 oder 1,

n ist 50 oder größer, und
mit der Bedingung, daß das Verhältnis der Einheiten, in denen x = 1 ist, zu Einheiten, in denen y = 1 ist, zwischen 99:1 bis einschließlich 1:99 beträgt.

**2.** Membrane nach Anspruch 1,
**dadurch gekennzeichnet,**
daß jedes $R^1$ unabhängig eine direkte Bindung, ein zweiwertiger Kohlenwasserstoffrest mit 1-6 Kohlenstoffatomen, ein zweiwertiger Fluorkohlenstoffrest mit 1-6 Kohlenstoffatomen oder ein inert substituierter zweiwertiger Kohlenwasserstoffrest mit 1-6 Kohlenstoffatomen ist,
jedes $R^2$ unabhängig ein zweiwertiger aliphatischer Rest mit 1-20 Kohlenstoffatomen, cycloaliphatischer Rest mit 5-20 Kohlenstoffatomen, aromatischer Rest mit 6-20 Kohlenstoffatomen, ein mit Halogen substituierter aromatischer Rest mit 6-20 Kohlenstoffatomen, ein mit Halogen substituierter aliphatischer Rest mit 1-20 Kohlenstoffatomen oder ein mit Halogen substituierter cycloaliphatischer Kohlenwasserstoffrest mit 5-20 Kohlenstoffatomen ist, und
W der Rest eines monofunktionellen aliphatischen Alkohols, aromatischen Alkohols, Thiols oder Amins ist.

**3.** Membrane nach Anspruch 2,
**dadurch gekennzeichnet,**
daß jedes $R^1$ unabhängig ein zweiwertiger Kohlenwasserstoffrest mit 1-6 Kohlenstoffatomen ist,
jedes $R^2$ unabhängig ein zweiwertiger cycloaliphatischer Rest mit 5-20 Kohlenstoffatomen, ein aromatischer Rest mit 6-20 Kohlenstoffatomen, ein mit Halogen substituierter cycloaliphatischer Rest mit 5-20 Kohlenstoffatomen oder ein mit Halogen substituierter aromatischer Kohlenwasserstoffrest mit 6-20 Kohlenstoffatomen ist, und
W ein Hydroxycarbyloxyrest mit 1-20 Kohlenstoffatomen ist.

**4.** Membrane nach Anspruch 3,
**dadurch gekennzeichnet,**
daß jedes $R^1$ unabhängig ein zweiwertiger Alkylidenrest mit 1-6 Kohlenstoffatomen ist,
jedes $R^2$ unabhängig

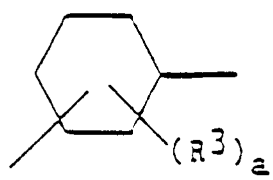

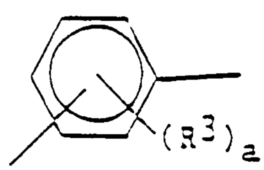

oder

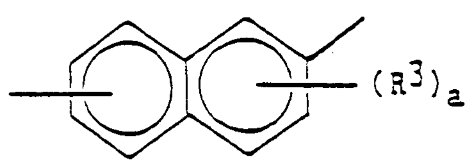

ist, in denen jedes $R^3$ unabhängig Chlor, Fluor, Phenyl oder halogeniertes Alkyl ist,
a ist 0-4, und
W ist ein $C_{1-20}$ Alkoxy-, $C_{6-20}$ Aryloxy- oder $C_{7-20}$ Alkyl-substituierter Aryloxyrest ist.

5. Membran nach Anspruch 4,
**dadurch gekennzeichnet,**
daß jedes $R^1$ Propyliden ist,
jedes $R^2$

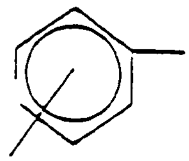

ist, und W para-tertiär-Butylphenyloxy oder Methoxy ist.

6. Membrane nach Anspruch 5,
**dadurch gekennzeichnet,**
daß das Polyestercarbonat von Bisphenol A und einer Mischung von Terephthaloylchlorid und Isophthaloylchlorid abgeleitet ist.

7. Verfahren zum Abtrennen von Sauerstoff aus einer Sauerstoff und Stickstoff enthaltenden Gasmischung durch
(a) Inberührungbringen der Gasmischung mit einer Seite einer Membrane nach jedem der Ansprüche 1-6, während eine Druckdifferenz über der Membrane aufrechterhalten wird, wobei der niedrigere Druck auf der anderen Seite der Membrane vorhanden ist, und
(b) Entfernen des hindurchgetretenen Sauerstoffes von der anderen Seite der Membrane.

8. Verfahren nach Anspruch 7,
**dadurch gekennzeichnet,**
daß die Gasmischung mit der Membrane bei einer Temperatur von 0° bis 80°C in Berührung gebracht wird und die Druckdifferenz über die Membrane von 40 psig (275 kPa) bis 200 pisg (1400 kPa) beträgt.

9. Verfahren nach Anspruch 8,
**dadurch gekennzeichnet,**
daß die Druckdifferenz über die Membrane von 95 pisg (650 kPa) bis 120 pisg (830 kPa) beträgt.

10. Verfahren nach Anspruch 8 oder 9,
**dadurch gekennzeichnet,**
daß die Gasmischung bei einer Temperatur von 5° bis 45°C mit der Membrane in Berührung gebracht wird.